(19) **Europäisches Patentamt European Patent Office Office européen des brevets**

(11) **EP 4 778 749 A1**

(12) **EUROPEAN PATENT APPLICATION**
published in accordance with Art. 153(4) EPC

(43) Date of publication:
**22.07.2026 Bulletin 2026/30**

(21) Application number: **24864735.6**

(22) Date of filing: **13.09.2024**

(51) International Patent Classification (IPC):
**B60J 1/02** *(2006.01)*   **B32B 17/10** *(2006.01)*

(86) International application number:
**PCT/CN2024/118725**

(87) International publication number:
**WO 2025/056021 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 CN 202311192201**

(71) Applicant: **Fuyao Glass Industry Group Co., Ltd.**
**Fuqing, Fujian 350300 (CN)**

(72) Inventors:
• **CAI, Feng**
  **Fuzhou, Fujian 350300 (CN)**

• **HE, Changlong**
  **Fuzhou, Fujian 350300 (CN)**
• **ZHANG, Canzhong**
  **Fuzhou, Fujian 350300 (CN)**
• **LI, Weijun**
  **Fuzhou, Fujian 350300 (CN)**
• **GUAN, Jinliang**
  **Fuzhou, Fujian 350300 (CN)**
• **JIANG, Bingming**
  **Fuzhou, Fujian 350300 (CN)**

(74) Representative: **Herrero & Asociados, S.L.**
**Edificio Aqua - Calle Agustín de Foxá, 4-10, 2ᴼA**
**28036 Madrid (ES)**

(54) **WINDSHIELD AND VEHICLE**

(57)     A windshield and a vehicle. The windshield comprises an optical sensor (200) and laminated glass (100); the optical sensor (200) is mounted inside a vehicle; an optical window (101) is present in the field of view of the optical sensor (200); the laminated glass (100) comprises outer-layer glass (110), a bonding layer (130), and inner-layer glass (120) which are stacked; and the inner-layer glass (120) is provided with a first through hole (121), wherein the optical window (101) is located in the first through hole (121), and the MTF value of the optical window (101) is greater than or equal to 0.3.

FIG. 6

EP 4 778 749 A1

## Description

This application claims priority to Chinese patent application No. 202311192201.1, entitled "Windshield and Vehicle", filed on September 15, 2023, which is incorporated herein by reference in its entirety.

## TECHNICAL FIELD

The present application relates to the field of glass product technologies, and in particular, to a windshield and a vehicle.

## BACKGROUND

In automatic driving or assistant driving of an automobile, a large amount of data of a front environment needs to be collected, and an optical sensor mounted on a windshield is a quite important data collection device. With a continuous improvement of automatic driving requirements, the optical sensor needs to accurately acquire an image of a further position, and correspondingly, pixels of the optical sensor need to be continuously improved, so that the optical sensor with a long distance and a narrow viewing angle has a higher requirement on optical distortion of the windshield, so as to reduce object distortion as much as possible.

From a requirement value of the optical distortion of the windshield, the requirement on the optical distortion of the windshield becomes stricter from the requirement in an early stage that the optical distortion of the windshield is less than 200mdpt (diopter) to the requirement that the optical distortion of the windshield is less than 150mdpt, 120mdpt, 100mdpt and even a value smaller than 100mdpt.

In the related art, most optical sensor manufacturers do not consider influences of the automobile windshield on an imaging definition of the optical sensor, so that after the optical sensor is actually assembled on the automobile, the windshield greatly influences a definition of the image acquired by the optical sensor, and particularly, the influence on imaging of the optical sensor with high pixels and the narrow viewing angle is obvious. When the imaging definition of the optical sensor is affected by the windshield, accurate recognition and determination of the image collected by the optical sensor by an algorithm of an advanced driving assistance system (ADAS) is affected, which causes the algorithm of the ADAS to generate a deviation.

A modulation transfer function (MTF) refers to a function in which a modulation degree changes with a spatial frequency, and currently, an MTF value is often adopted to directly evaluate a performance of the optical sensor, and a higher MTF value represents a better definition of the image acquired by the optical sensor.

In the existing windshield and optical sensor mounted on the automobile, the MTF value of the optical sensor in a corresponding optical window region of the windshield is about 0.1, the image obtained by the optical sensor is not clear enough, a great deviation is generated for the algorithm of the ADAS of the automobile, and requirements of automatic driving above level L3 cannot be met.

## SUMMARY

According to various embodiments of the present application, a windshield and a vehicle are provided.

In a first aspect, embodiments of the present application provide a windshield including an optical sensor and a laminated glass. The optical sensor is mounted inside a vehicle. An optical window is arranged in a visual field of the optical sensor, the laminated glass includes an outer layer glass, a bonding layer and an inner layer glass which are laminated, and the inner layer glass is provided with a first through hole; wherein the optical window is located in the first through hole, and an MTF value of the optical window is greater than or equal to 0.3.

In a second aspect, embodiments of the present application provide a vehicle including the above windshield, the optical sensor being mounted inside the vehicle and facing the optical window.

## BRIEF DESCRIPTION OF THE DRAWINGS

Various other advantages and merits will become apparent to those skilled in the art by reading through the following detailed description of preferred embodiments. Figures are only intended to illustrate preferred embodiments and not construed as limiting the present application. In all figures, like reference numerals denote like parts. In the drawings:

FIG. 1 is a schematic vertical sectional diagram of a windshield according to an embodiment of the present application.
FIG. 2 is a schematic enlarged diagram of a first through hole shown in FIG. 1 which is trapezoidal.
FIG. 3 is a schematic enlarged diagram of the first through hole shown in FIG. 1 which is circular.

FIG. 4 is a schematic enlarged diagram of the first through hole shown in FIG. 1 which is elliptical.

FIG. 5 is a schematic enlarged diagram of the first through hole shown in FIG. 1 which is rectangular.

FIG. 6 is a schematic partial enlarged diagram of the windshield shown in FIG. 1.

FIG. 7 is a schematic horizontal sectional diagram of the windshield shown in FIG. 1.

FIG. 8 is a schematic diagram of various test points of an optical window of the windshield according to the embodiment of the present application.

FIG. 9 is a front schematic diagram of the windshield according to the embodiment of the present application viewed from the interior of a vehicle to the exterior of the vehicle.

FIG. 10 is a schematic partial enlarged diagram of the windshield shown in FIG. 9.

FIG. 11 is another schematic vertical sectional diagram of the windshield according to the embodiment of the present application.

Reference signs: laminated glass 100; optical window 101; outer layer glass 110; inner layer glass 120; first through hole 121; bonding layer 130; second through hole 131; first shielding layer 140; third through hole 141; extending portion 1401; second shielding layer 150; antireflection layer 160; thermal insulation layer 170; optical sensor 200.

## DETAILED DESCRIPTION

In order to make the aforementioned objects, features and advantages of the present application more apparent, the embodiments of the present application are described below in detail with reference to the accompanying drawings. In the following description, numerous specific details are set forth, so as to provide a thorough understanding of the present application. However, the present application may be implemented in many ways different from those described herein, those skilled in the art may make similar improvements without departing from the essence of the present application, and therefore, the present application is not limited to the examples disclosed below.

In a first aspect, the present application provides a windshield, including:

an optical sensor mounted inside a vehicle; and
a laminated glass having an optical window in a visual field of the optical sensor, the laminated glass including an outer layer glass, a bonding layer and an inner layer glass which are laminated, and the inner layer glass being provided with a first through hole;
wherein the optical window is located in the first through hole, and an MTF value of the optical window is greater than or equal to 0.3.

In some embodiments, relative positions of the laminated glass and the optical sensor satisfy the following conditions:

after the windshield is mounted on the vehicle, an included angle between a connecting line of a top end and a bottom end of the laminated glass and a central axis of the optical sensor is $\alpha$; a vertical field-of-view angle of the optical sensor is $\beta$; a length of a connecting line of a top end and a bottom end of the first through hole is a, and a length of an intersecting line of a vertical field of view of the optical sensor and the outer layer glass is b;
wherein a$\geq$b+10 , **b = K1 $\times$ [1/tan ($\alpha$-$\beta$/2)-1/tan($\alpha$+$\beta$/2)]**, K1 is a constant, and K1 ranges from 12 to 18.

In some embodiments, the relative positions of the laminated glass and the optical sensor satisfy the following conditions:

a horizontal field-of-view angle of the optical sensor is $\gamma$; a width of the first through hole in a direction of a horizontal field of view of the optical sensor is m; a length of an intersecting line of the horizontal field of view of the optical sensor and the outer layer glass is n;
wherein m $\geq$ n+10, **n = K2 $\times$ tan ($\gamma$/2)/sin ($\alpha$),** K2 is a constant, and K2 ranges from 24 to 36.

In some embodiments, $\alpha$ ranges from 20° to 45°, $\beta$ ranges from 17° to 65°, and $\gamma$ ranges from 28° to 120°.

In some embodiments, a minimum gap distance between the optical sensor and the inner layer glass is c, and c ranges from 2mm to 5mm.

In some embodiments, the bonding layer is provided with a second through hole, the second through hole is in communication with the first through hole, and the optical window is located in the second through hole.

In some embodiments, the laminated glass further includes a first shielding layer arranged between the outer layer glass and the bonding layer, the first shielding layer is provided with a third through hole, the third through hole is in communication with the second through hole, and the optical window is located in the third through hole.

In some embodiments, the laminated glass further includes a second shielding layer, and the second shielding layer is arranged on a side of the inner layer glass away from the bonding layer.

In some embodiments, a profile area of the optical window is less than that of the third through hole, the profile area of the third through hole is less than or equal to that of the first through hole, and a profile area of the second through hole is greater than or equal to that of the first through hole.

In some embodiments, the laminated glass further includes an antireflection layer arranged on a side of the outer layer glass adjacent to the bonding layer, the antireflection layer is located in the third through hole and at least covers the optical window, and the antireflection layer is configured to reduce a reflectivity of the outer layer glass to an optical signal emitted and/or received by the optical sensor.

In some embodiments, the laminated glass further includes an electric heating element arranged on the side of the outer layer glass adjacent to the bonding layer, and the electric heating element is located in the third through hole and at least covers the optical window.

In some embodiments, the laminated glass further includes a thermal insulation layer, the thermal insulation layer includes at least one metallic silver layer, silver alloy layer, or transparent conductive oxide layer, and the thermal insulation layer avoids the optical window.

In some embodiments, the outer layer glass is a transparent glass or ultra-transparent glass and the inner layer glass is a transparent glass or tinted glass;
a total iron content of the transparent glass is less than or equal to 0.08%, and a visible light transmittance of the transparent glass is greater than or equal to 80%; a total iron content of the ultra-transparent glass is less than or equal to 0.015%, and a visible light transmittance of the ultra-transparent glass is greater than or equal to 91%; a total iron content of the tinted glass is greater than or equal to 0.1%, and a visible light transmittance of the tinted glass is greater than 70%.

In some embodiments, the optical sensor is a visible light camera having a pixel number greater than or equal to 2 million, and an MTF value of the visible light camera at 1/2 of the Nyquist frequency is greater than or equal to 0.6.

In some embodiments, the optical window has a first transmittance TL1 for visible light with a wavelength ringing from 440nm to 700nm incident at an incident angle of 0° to 70°, the optical window has a transmittance TL2 for visible light with a wavelength ringing from 600nm to 700nm incident at an incident angle of 0° to 70°, TL1≥50%, and TL2/TL1≥0.8.

In a second aspect, embodiments of the present application provide a vehicle including the above windshield, the optical sensor being mounted inside the vehicle and facing the optical window.

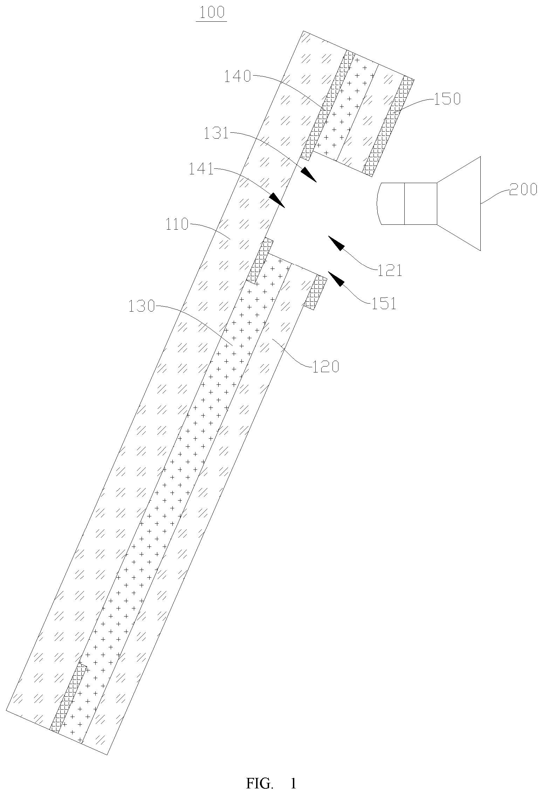

Referring to FIG. 1, which is a schematic vertical sectional diagram of a windshield according to an embodiment of the present application. The windshield includes an optical sensor 200 and a laminated glass 100.

The optical sensor 200 is mounted inside a vehicle. The laminated glass 100 has an optical window 101 in a view field of the optical sensor 200, and light emitted and/or received by the optical sensor 200 passes through the optical window 101 of the laminated glass 100 to realize collection of data of an environment outside the vehicle.

The laminated glass 100 includes an outer layer glass 110, a bonding layer 130 and an inner layer glass 120 which are laminated, and the inner layer glass 120 is provided with a first through hole 121.

The optical window 101 is located in the first through hole 121, and an MTF value of the optical window 101 is greater than or equal to 0.3.

In the present application, after the windshield is mounted on the vehicle, the outer layer glass 110 is located outside the vehicle, the inner layer glass 120 is located inside the vehicle, and the bonding layer 130 connects the outer layer glass 110 and the inner layer glass 120 to form a laminated glass structure meeting a use standard of an automobile glass. The outer layer glass 110 has a surface away from the bonding layer 130 and a surface facing the bonding layer 130, the surface of the outer layer glass 110 away from the bonding layer 130 is an outer surface of the laminated glass 100, the inner layer glass 120 has a surface away from the bonding layer 130 and a surface facing the bonding layer 130, and the surface of the inner layer glass 120 away from the bonding layer 130 is an inner surface of the laminated glass 100.

It is understood that the windshield according to the present application may be a front windshield or a rear windshield of the vehicle. Specifically, the present application is specifically explained with the front windshield as an example.

A thickness and material of the outer layer glass 110, a material of the bonding layer 130, and a thickness and material of the inner layer glass 120 are not particularly limited in the present application. Optionally, the thickness of the outer layer glass 110 is greater than or equal to 2.1mm and less than or equal to 5mm. The outer layer glass 101 may include at least one of a soda lime glass, a high alumina glass, a lithium alumina glass, and a borosilicate glass. The material of the bonding layer 130 may be polyvinyl butyral (PVB), ethylene vinyl acetate (EVA), an ionic polymer film (SGP), or the like. The thickness of the inner layer glass 120 is greater than or equal to 0.7mm and less than or equal to 2.1mm. Similarly, the inner layer glass 120 may include at least one of a soda lime glass, a high alumina glass, a lithium alumina glass, and a borosilicate glass. The thickness of the outer layer glass 110 may be the same as or different from that of the inner layer glass 120, and preferably, the thickness of the outer layer glass 110 is greater than that of the inner layer glass 120. The material of the outer layer glass 110 may be the same as or different from that of the inner layer glass 120.

It should be noted that, since the first through hole 121 is formed on the surface of the inner layer glass 120, a region of the outer layer glass 110 corresponding to the first through hole 121 is relatively thin. Based on this, by correspondingly increasing the thickness of the outer layer glass 110 to cause the thickness of the outer layer glass 110 to be 0.5mm to 4.3mm greater than that of the inner layer glass 120. For example, the thickness of the outer layer glass 110 is 2.1mm and the thickness of the inner layer glass 120 is 1.6mm. For another example, the thickness of the outer layer glass 110 is 3.0mm and the thickness of the inner layer glass 120 is 1.1mm. For another example, the thickness of the outer layer glass 110 is 3.5mm and the thickness of the inner layer glass 120 is 0.7mm. Preferably, the thickness of the outer layer glass 110 is 1mm to 3mm is greater than that of the inner layer glass 120. The thickness of the region of the outer layer glass 110 corresponding to the first through hole 121 is increased, the risk of stress concentration at a profile boundary of the first through hole 121 during use of the laminated glass 100 is reduced, and a mechanical performance and a structural strength of the whole laminated glass 100 are improved.

The outer layer glass 110 and the inner layer glass 120 may be processed by an automobile glass bending process to have a certain curvature, and the automobile glass bending process may be, for example, a self-weight forming process at at least 500°C, a pressing process at at least 500°C, or the like. The bent outer layer glass 110 and inner layer glass 120 and the bonding layer 130 are then laminated together and processed by a laminating process, and then, the outer layer glass 110, the bonding layer 130 and the inner layer glass 120 are bonded into a whole composite glass, so that the final laminated glass 100 is obtained.

The inner layer glass 120 is provided with the first through hole 121. It is understood that the first through hole 121 penetrates through both opposite surfaces of the inner layer glass 120. The optical sensor 200 collects the data of the environment outside the vehicle through the optical window 101 in the first through hole 121. The optical sensor 200 may be mounted on the surface of the laminated glass 100 adjacent to the interior of the vehicle by a corresponding fixing bracket and is adjacent to a middle of a top edge of the laminated glass 100, so as to acquire a larger field-of-view region. A photographing direction of the optical sensor 200 is towards the first through hole 121.

In order to ensure an overall strength of the laminated glass 100 to better protect passengers in the vehicle, an area of the first through hole 121 is set to S1, an area of the laminated glass 100 is set to S, and preferably, S1 and S satisfy the following condition: $0.0004 \leq S1/S \leq 0.15$, which also satisfies a requirement on a minimum field-of-view (FOV) angle of the optical sensor 200 for acquiring the data of the environment outside the vehicle, and reduces difficulty of manufacturing the laminated glass 100. Optionally, S1 and S may also satisfy the following condition: $0.0005 \leq S1/S \leq 0.1$ or $0.001 \leq S1/S \leq 0.008$.

It can be understood that detection light emitted from the optical sensor 200 passes through the first through hole 121 and the optical window 101 of the laminated glass 100 to detect an object outside the vehicle, and detection light emitted or reflected by the object outside the vehicle passes through the optical window 101 of the laminated glass 100 and the first through hole 121 to enter the optical sensor 200, so that the optical sensor 200 can collect the data of the environment outside the vehicle and transmit the collected data of the environment to an advanced driving assistance system (ADAS) of the vehicle, and an algorithm of the ADAS performs corresponding data processing on the environment image data to provide driving assistance. The data of the environment may be image data, point cloud data, or the like.

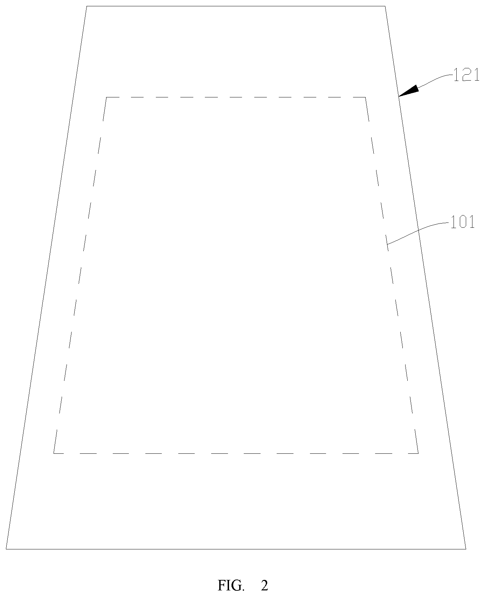

Referring to FIG. 1 and FIG. 2, the light emitted and/or received by the optical sensor 200 needs to pass through a field-of-view region of the optical sensor 200. The optical window 101 of the laminated glass 100 is correspondingly the field-of-view region of the optical sensor 200 in a front view field, that is, the field-of-view region of the optical sensor 200 forms the optical window 101 on the laminated glass 100. In order to enable the light emitted and/or received by the optical sensor 200 to smoothly pass through the laminated glass 100, the inner layer glass 120 is provided with the first through hole 121 at a position corresponding to the optical window 101, and the optical window 101 is located in the first through hole 121.

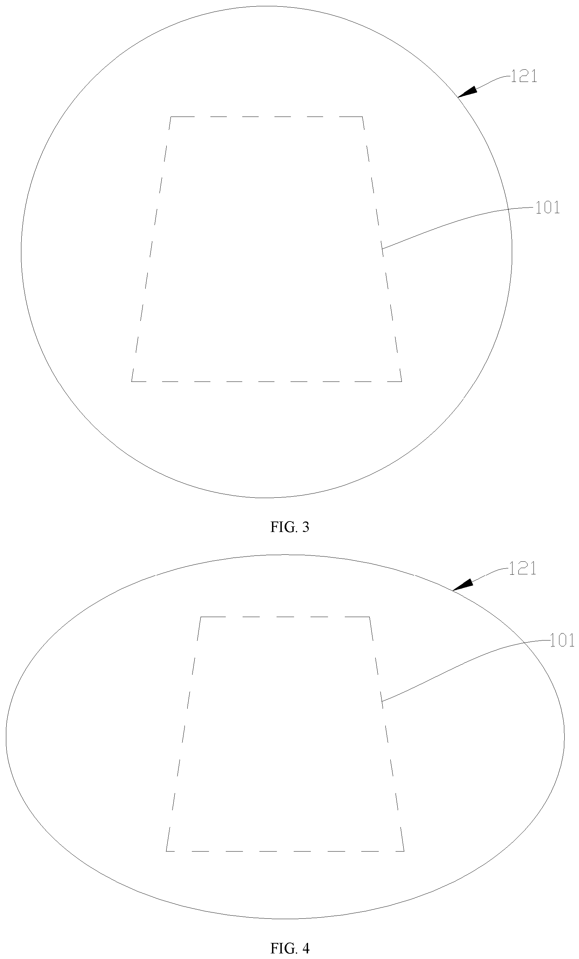

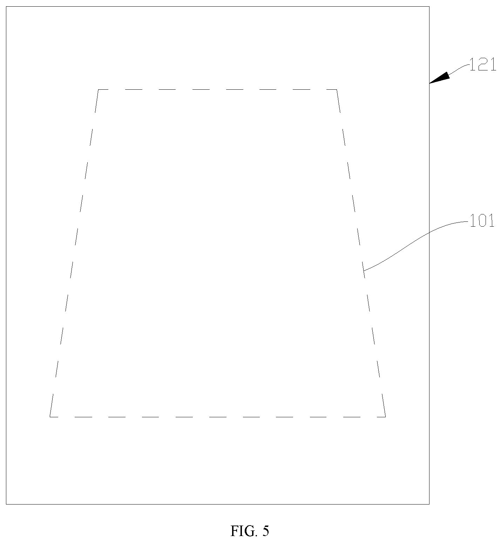

Referring to FIG. 2 to FIG. 5, a shape of the first through hole 121 may be one of a trapezoidal shape, a circular shape, an elliptical shape, a square shape, and a rectangular shape. A region enclosed by the dotted line in the first through hole 121 is the optical window 101 formed on the laminated glass 100 by the field-of-view region of the optical sensor 200. As shown in FIG. 2, the first through hole 121 has a trapezoidal shape, and preferably, four corners of the trapezoidal shape are rounded corners having a radius of 5mm or more. As shown in FIG. 3, the first through hole 121 has a circular shape. As shown in FIG. 4, the first through hole 121 has an elliptical shape. As shown in FIG. 5, the first through hole 121 has a rectangular shape, and preferably, four corners of the rectangular shape are rounded corners having a radius of 5mm or more.

It is understood that the field-of-view region of the optical sensor 200 has a field-of-view (FOV) angle for representing a size of a view field range of the optical sensor 200. The FOV angles of the optical sensor 200 include a vertical field-of-view angle $\beta$ and a horizontal field-of-view angle $\gamma$. In order to cause the optical sensor 200 to acquire clearer environment image data, reduce the probability of causing a deviation for the algorithm of the ADAS of the vehicle, and meet requirements of automatic driving above level L3, in the application, the relative positions of the outer layer glass 110, the inner layer glass 120 and the optical sensor 200, and size parameters of the optical window 101 and the first through hole 121 are adjusted, so that the MTF value of the optical window of the laminated glass 100 is greater than or equal to 0.3. The MTF value of the optical window of the laminated glass 100 can be measured according to ISO12233, and a specific example of a measuring method may include: causing the laminated glass 100 and the optical sensor 200 to be in a state of simulated assembly or actual assembly in the vehicle, placing a standard test image outside the vehicle and in front of the laminated glass 100, collecting a standard test image of an outer side of the laminated glass 100 through the optical sensor 200, correspondingly setting a plurality of MTF test points at a plurality of point positions of the image, and performing testing through a corresponding MTF test apparatus to calculate an MTF value corresponding to each MTF test point, the MTF value corresponding to each test point on the image being the MTF value of the optical window 101.

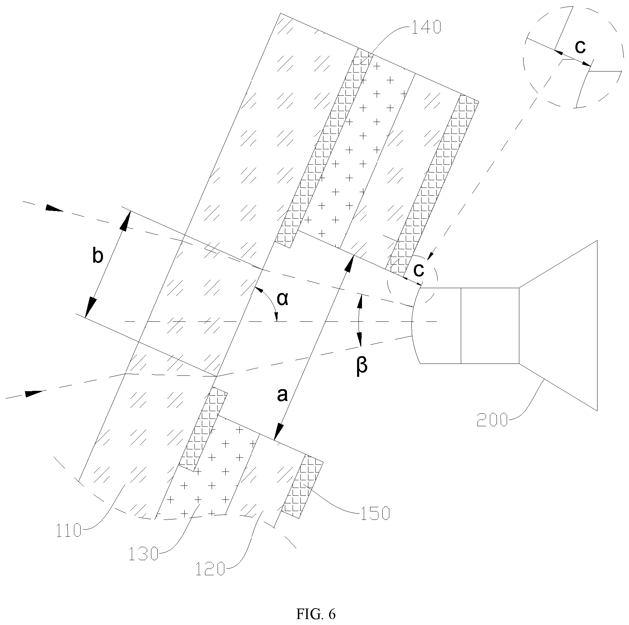

In some embodiments of the present application, referring to FIG. 6, which is a schematic enlarged vertical sectional diagram of the windshield shown in FIG. 1. After the windshield is mounted on the vehicle, an included angle between a connecting line of a top end and a bottom end of the laminated glass 100 and a central axis of the optical sensor 200 is $\alpha$, the central axis of the optical sensor 200 can be understood as an optical axis of the optical sensor 200, reference can be made to an extension line of the inner surface of the laminated glass 100 in FIG. 6 for the connecting line of the top end and the bottom end of the laminated glass 100, and reference can be made to a horizontal dotted line in FIG. 6 for the central axis of the optical sensor 200. A vertical field-of-view angle of the optical sensor 200 is $\beta$, and the vertical field-of-view angle of the optical sensor 200 is a field-of-view angle of the optical sensor 200 in a vertical section. A length of a connecting line of a top end and a bottom end of the first through hole 121 is a, and the length of the connecting line of the top end and the bottom end of the first through hole 121 is equal to a maximum size of the first through hole 121 in a direction along the connecting line of the top end and the bottom end of the laminated glass 100. A length of an intersecting line of a vertical field of view of the optical sensor 200 and the outer layer glass 110 is b, that is, a maximum size of the optical window 101 in the direction along the connecting line of the top end and the bottom end of the laminated glass 100 is b. The relative positions of the laminated glass 100 and the optical sensor 200 satisfy the following conditions: a $\geq$ b+10, **b = K1 $\times$ [1/tan ($\alpha$-$\beta$/2)-1/tan($\alpha$+$\beta$/2)]**, that is, in the direction along the connecting line of the top end and the bottom end of the laminated glass 100, a difference between a size of the first through hole 121 and a size of the optical window 101 is greater than or equal to 10mm, which ensures that the MTF value of the optical window 210 is not affected by the inner layer glass 120, thereby being beneficial to improving detection quality of the optical sensor 200, and meeting an MTF requirement of a camera with high precision and a narrow field-of-view angle.

In the application, K1 is a constant and K1 ranges from 12 to 18. Optionally, K1 may be one of 12, 13, 14, 15, 16, 17, and 18. Units of a and b are mm.

In the embodiment of the present application, $\alpha$ is greater than or equal to 20° and less than or equal to 45°. $\beta$ is greater than or equal to 17° and less than or equal to 65°. For example, $\alpha$ can be one of 20°, 24°, 30°, 35°, 40°, 42°, 45°, etc. $\beta$ may be one of 17°, 20°, 25°, 30°, 40°, 50°, 65°, etc. It should be understood that the vertical field-of-view angle $\beta$ of the optical sensor 200 is an inherent value existing after the optical sensor 200 leaves the factory, and depends on a manufacturer of the optical sensor 200, and the optical sensor 200 can be purchased directly according to actual needs. On the basis that the relative positions and relevant size parameters of the laminated glass 100 and the optical sensor 200 satisfy the above formula, $\alpha$ is limited to a range of 20° to 45°, so that the MTF value of the optical window 101 can be improved to a certain extent while the camera with high precision and the narrow field-of-view angle is selected, and the MTF value of the optical window 101 is greater than or equal to 0.3.

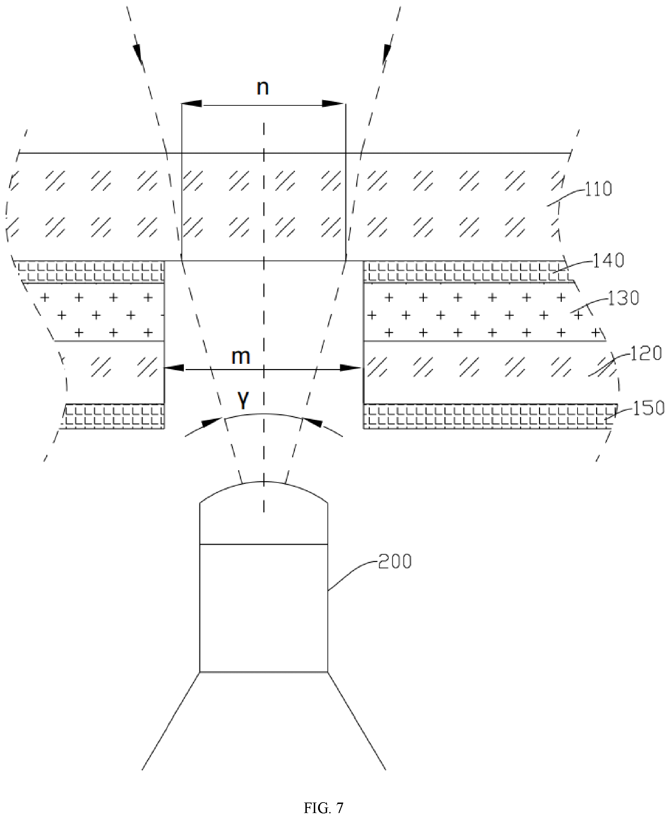

Further, referring to FIG. 7, which is a schematic horizontal sectional diagram of the windshield according to the embodiment of the present application. A horizontal field-of-view angle of the optical sensor 200 is $\gamma$, and the horizontal field-of-view angle of the optical sensor 200 is a field-of-view angle of the optical sensor 200 in a horizontal section. A width of the first through hole 121 in a direction of a horizontal field of view of the optical sensor 200 is m, and a length of an intersecting line of the horizontal field of view of the optical sensor 200 and the outer layer glass 100 is n. The relative positions of the laminated glass 100 and the optical sensor 200 further satisfy the following conditions: m $\geq$ n+10 and **n = K2 $\times$ tan($\gamma$/2)/ sin ($\alpha$).** That is, in the direction along the horizontal field of view, a difference between a size of the first through hole 121 and a size of the optical window 101 is greater than or equal to 10mm, which ensures that the MTF value of the optical window 210 is not affected by the inner layer glass 120, thereby being beneficial to improving the detection quality of the optical sensor 200, and meeting the MTF requirement of the camera with the high precision and narrow field-of-view angle.

In the application, K2 is a constant and K2 ranges from 24 to 36. Optionally, K2 may be one of 24, 25, 26, 27, 28, 29, 30, 31, 32, 33, 34, 35, and 36. Units of m and n are mm.

Optionally, $\gamma$ is greater than or equal to 28° and less than or equal to 120°. For example, $\gamma$ can be one of 28°, 40°, 65°, 74°, 89°, 97°, 120°, etc. Similarly, the horizontal field-of-view angle $\gamma$ of the optical sensor 200 is an inherent value existing after the optical sensor 200 leaves the factory, and depends on the manufacturer of the optical sensor 200, and the optical sensor 200 can be purchased directly according to actual needs. By making $\gamma$ greater than or equal to 28° and less than or equal to 120°, the MTF value of the optical window 101 can be improved to a certain extent while the camera with high precision and the narrow field-of-view angle is selected, and the MTF value of the optical window 101 is greater than or equal to 0.3.

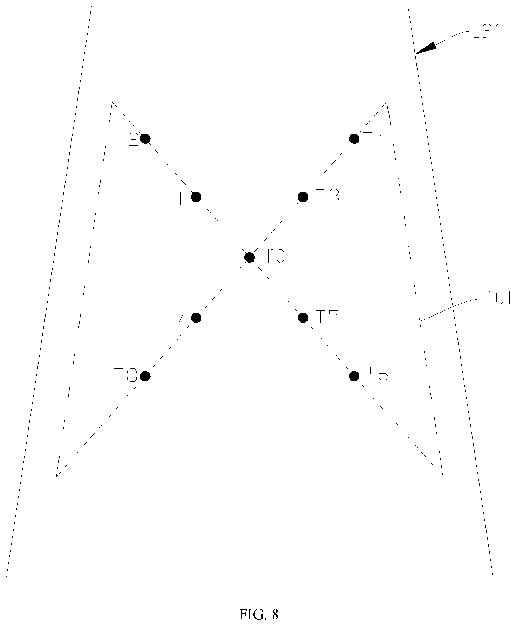

Referring to FIG. 8, for example, vertical projections of the optical window 101 and the first through hole 121 relative to the outer layer glass 110 are both isosceles trapezoids, 9 MTF test points are set on two diagonal lines of the

EP 4 778 749 A1

optical window 101, an intersection point of the two diagonal lines is a first test point T0 defined as 0.00center, the remaining eight test points are T1, T2, T3, T4, T5, T6, T7, and T8, the test point T1 is a point located 50mm to the left and 50mn upward from the test point T0, the test point T2 is a point located 75mm to the left and 75mm upward from test point T0, the test point T3 is a point located 50mm to the right and 50mm upward from test point T0, the test point T4 is a point located 75mm to the right and 75mm upward from test point T0, the test point T5 is a point located 50mm to the right and 50mm downward from test point T0, the test point T6 is a point located 75mm to the right and 75mm downward from test point T0, the test point T7 is a point located 50mm to the left and 50mm downward from test point T0, and the test point T8 is a point located 75mm to the left and 75mm downward from test point T0.

Then, the optical sensor 200 collects the standard test image of the outer side of the laminated glass 100 in this case, and correspondingly, the 9 MTF test points all have corresponding pixels on the image collected by the optical sensor 200, and testing is performed through the corresponding MTF test apparatus to calculate the MTF values corresponding to the pixels, i.e., the MTF values corresponding to the 9 MTF test points. MTF testing was performed on several examples according to ISO12233, and test results are shown in the following table 1:

Table 1: MTF values of 9 MTF test points of examples 1-15

|  | T0 | T1 | T2 | T3 | T4 | T5 | T6 | T7 | T8 |
|---|---|---|---|---|---|---|---|---|---|
| Example 1 | 0.57 | 0.56 | 0.56 | 0.57 | 0.56 | 0.60 | 0.57 | 0.54 | 0.49 |
| Example 2 | 0.55 | 0.56 | 0.55 | 0.56 | 0.54 | 0.61 | 0.57 | 0.55 | 0.49 |
| Example 3 | 0.56 | 0.56 | 0.53 | 0.55 | 0.53 | 0.61 | 0.59 | 0.54 | 0.47 |
| Example 4 | 0.58 | 0.57 | 0.54 | 0.55 | 0.53 | 0.59 | 0.57 | 0.51 | 0.45 |
| Example 5 | 0.56 | 0.57 | 0.53 | 0.54 | 0.53 | 0.60 | 0.56 | 0.53 | 0.46 |
| Example 6 | 0.60 | 0.57 | 0.53 | 0.58 | 0.53 | 0.60 | 0.55 | 0.53 | 0.49 |
| Example 7 | 0.60 | 0.53 | 0.54 | 0.57 | 0.53 | 0.60 | 0.56 | 0.52 | 0.45 |
| Example 8 | 0.57 | 0.55 | 0.55 | 0.57 | 0.52 | 0.59 | 0.56 | 0.51 | 0.45 |
| Example 9 | 0.59 | 0.57 | 0.54 | 0.58 | 0.51 | 0.61 | 0.55 | 0.54 | 0.47 |
| Example 10 | 0.57 | 0.53 | 0.47 | 0.46 | 0.47 | 0.48 | 0.46 | 0.53 | 0.42 |
| Example 11 | 0.55 | 0.51 | 0.46 | 0.48 | 0.42 | 0.57 | 0.55 | 0.51 | 0.48 |
| Example 12 | 0.55 | 0.48 | 0.44 | 0.47 | 0.43 | 0.58 | 0.54 | 0.50 | 0.49 |
| Example 13 | 0.59 | 0.55 | 0.47 | 0.52 | 0.52 | 0.56 | 0.47 | 0.50 | 0.48 |
| Example 14 | 0.59 | 0.48 | 0.47 | 0.49 | 0.47 | 0.58 | 0.52 | 0.50 | 0.47 |
| Example 15 | 0.57 | 0.50 | 0.46 | 0.48 | 0.44 | 0.55 | 0.50 | 0.49 | 0.48 |

It should be noted that, in the above examples 1-15, the relative positions and the relevant parameters of the laminated glass 100 and the optical sensor 200 satisfy $a \geq b + 10$ and/or $m \geq n + 10$.

Then, MTF testing was performed on a plurality of comparative examples, and comparative examples 1-7 are different from the examples 1-15 only in that the laminated glass 100 is not provided with the first through hole 121. Comparative examples 8-14 differ from the examples 1-15 only in that the relative positions and the relevant parameters of the laminated glass 100 and the optical sensor 200 do not satisfy $a \geq b + 10$ and $m \geq n + 10$. MTF testing was performed on the several comparative examples according to ISO12233, and test results are shown in the following table 2:

Table 2: MTF values of 9 MTF test points of comparative examples 1-14

|  | T0 | T1 | T2 | T3 | T4 | T5 | T6 | T7 | T8 |
|---|---|---|---|---|---|---|---|---|---|
| Comparative example 1 | 0.40 | 0.23 | 0.21 | 0.28 | 0.25 | 0.32 | 0.31 | 0.38 | 0.41 |
| Comparative example 2 | 0.31 | 0.18 | 0.13 | 0.20 | 0.27 | 0.44 | 0.43 | 0.35 | 0.39 |
| Comparative example 3 | 0.34 | 0.23 | 0.12 | 0.25 | 0.26 | 0.52 | 0.53 | 0.42 | 0.46 |
| Comparative example 4 | 0.32 | 0.18 | 0.18 | 0.16 | 0.25 | 0.53 | 0.55 | 0.35 | 0.35 |
| Comparative example 5 | 0.12 | 0.17 | 0.15 | 0.18 | 0.16 | 0.47 | 0.54 | 0.30 | 0.35 |
| Comparative example 6 | 0.17 | 0.06 | 0.04 | 0.11 | 0.13 | 0.47 | 0.51 | 0.32 | 0.36 |

(continued)

|  | T0 | T1 | T2 | T3 | T4 | T5 | T6 | T7 | T8 |
|---|---|---|---|---|---|---|---|---|---|
| Comparative example 7 | 0.24 | 0.04 | 0.07 | 0.06 | 0.17 | 0.39 | 0.43 | 0.31 | 0.35 |
| Comparative example 8 | 0.54 | 0.37 | 0.28 | 0.44 | 0.35 | 0.54 | 0.50 | 0.46 | 0.46 |
| Comparative example 9 | 0.51 | 0.36 | 0.19 | 0.43 | 0.41 | 0.53 | 0.51 | 0.48 | 0.46 |
| Comparative example 10 | 0.31 | 0.49 | 0.48 | 0.34 | 0.35 | 0.35 | 0.36 | 0.33 | 0.26 |
| Comparative example 11 | 0.54 | 0.39 | 0.29 | 0.42 | 0.42 | 0.57 | 0.55 | 0.48 | 0.41 |
| Comparative example 12 | 0.45 | 0.30 | 0.15 | 0.28 | 0.31 | 0.53 | 0.54 | 0.49 | 0.45 |
| Comparative example 13 | 0.49 | 0.29 | 0.15 | 0.41 | 0.39 | 0.54 | 0.52 | 0.43 | 0.43 |
| Comparative example 14 | 0.46 | 0.37 | 0.30 | 0.24 | 0.23 | 0.56 | 0.55 | 0.43 | 0.38 |

In combination with the above tables 1 and 2, it is clear that in the examples 1-15, the corresponding MTF values of the 9 MTF test points are all greater than or equal to 0.3, even greater than or equal to 0.4, and even greater than or equal to 0.5.

In the comparative examples 1-7, since the laminated glass 100 is not provided with the first through hole 121, at least three of the MTF values of the 9 MTF test points of the comparative examples 1-7 are less than 0.3, even at least four are less than 0.3, and even at least five are less than 0.3. The MTF values of some test points are less than 0.2, even less than 0.15, and even less than 0.1. It follows that the optical window 101 of the laminated glass 100 of the comparative examples 1-7 obviously cannot satisfy the requirement of the optical sensor 200 for acquiring clearer environment image data, and further cannot satisfy the requirement of automatic driving above the level L3.

In the comparative examples 8-14, although the laminated glass 100 is provided with the first through hole 121, the relative positions and the relevant parameters of the laminated glass 100 and the optical sensor 200 do not satisfy $a \geq b$ +10 and $m \geq n + 10$, and compared with the comparative examples 1-7, a number of test points in the comparative examples 8-14 with the MTF value smaller than 0.3 is greatly reduced, but the MTF values of 1 to 2 test points are still less than 0.3, and the optical window 101 of the laminated glass 100 of the comparative examples 8-14 also cannot satisfy the requirement of the optical sensor 200 for acquiring clearer environment image data, and cannot satisfy the requirement of automatic driving above the level L3.

Further, referring to FIG. 6 again, a minimum gap distance between the optical sensor 200 and the inner layer glass 120 is c, and c is 2mm to 5 mm. The minimum gap distance between the optical sensor 200 and the inner layer glass 120 can be understood as a distance from a point of the optical sensor 200 closest to the inner layer glass 120 to the inner layer glass 120, and specifically, for example, the distance may be 2mm, 2.5mm, 3mm, 3.5mm, 4mm, 4.5mm, 5mm, or the like, which can ensure that the optical sensor 200 is as close as possible to the inner layer glass 120 and facilitate setting of the position and the size of the first through hole 121. In the present application, the constants K1 and K2 may be determined according to the distance c between the optical sensor 200 and the inner layer glass 120. For example, when the distance c is equal to 2mm, the constant K1 is 12, and the constant K2 is 24; for another example, when the distance c is equal to 5mm, the constant K1 is 18, and the constant K3 is 36; when the distance c is greater than 2mm and less than 5mm, K1 may take a value greater than 12 and less than 18 according to an actual design, and K2 may take a value greater than 24 and less than 36 according to the actual design.

Referring to FIG. 1, FIG. 6 and FIG. 7, the bonding layer 130 is provided with a second through hole 131, the second through hole 131 is in communication with the first through hole 121, and the optical window 101 is located in the second through hole 131.

Specifically, a size of the second through hole 131 in an extension direction of a target axis (i.e., the connecting line of the top end and the bottom end of the laminated glass 100) may be greater than or equal to a, and/or a size of the second through hole 131 in the horizontal direction may be greater than or equal to m. In other words, a profile area of the second through hole 131 may be greater than or equal to that of the first through hole 121.

In this embodiment, the second through hole 131 is formed in the bonding layer 130, the second through hole 131 is in communication with the first through hole 121, and the optical window 101 is located in the second through hole 131, so that it can be avoided that softening and deformation of the bonding layer 130 in a production process of a vehicle window glass 10 due to heating, pressurization and other processes influence optical quality of the optical window 101, and an influence of the bonding layer 130 on a definition of an image collected by the optical sensor 200 is avoided.

Further, referring to FIG. 1, FIG. 6 and FIG. 7, the laminated glass 100 further includes a first shielding layer 140 arranged between the outer layer glass 110 and the bonding layer 130, the first shielding layer 140 is provided with a third through hole 141, the third through hole 141 is in communication with the second through hole 131, and the optical window 101 is located in the third through hole 141.

Specifically, the outer layer glass 110, the first shielding layer 140, the bonding layer 130, and the inner layer glass 120 are sequentially laminated. The third through hole 141 of the first shielding layer 140 is in communication with the first through hole 121 of the inner layer glass 120 and the second through hole 131 of the bonding layer 130. The first shielding layer 140 can be configured to shield components in the vehicle, which can ensure a consistent color of a periphery of the windshield, improve a peripheral appearance, also obstruct solar radiation, avoid aging of the components in the vehicle, improve stability of a product and prolong a service life of the product. A material of the first shielding layer 140 is preferably at least one of black ceramic ink, brown ceramic ink, black ultraviolet ink and brown ultraviolet ink, the first shielding layer 140 may be formed by screen printing, inkjet printing, etc., and a thickness of the first shielding layer 140 is in a micrometer level, for example, 5 to 40 micrometers.

In an embodiment, after the laminated glass 100 is formed by laminating the outer layer glass 110, the first shielding layer 140, the bonding layer 130 and the inner layer glass 120, a laser drilling process is used to sequentially form the first through hole 121 in the inner layer glass 120, the second through hole 131 in the bonding layer 130 and the third through hole 141 in the first shielding layer 140. Certainly, in other embodiments, the laser drilling process is first used to respectively form the first through hole 121 in the inner layer glass 120, the second through hole 131 in the bonding layer 130 and the third through hole 141 in the first shielding layer 140, and then, the outer layer glass 110, the first shielding layer 140, the bonding layer 130, and the inner layer glass 120 are laminated to form the laminated glass 100.

It should be noted that, since the first through hole 121 is formed in the inner layer glass 120 through the drilling process, and the second through hole 131 is formed in the bonding layer 130 through the drilling process, corresponding profile boundaries exist at the first through hole 121 and the second through hole 131, and when a person outside the vehicle looks towards the interior of the vehicle through the outer layer glass 110, an obvious unaesthetic feeling is generated, that is, the inner layer glass 120 having the first through hole 121 and the bonding layer 130 having the second through hole 131 may bring an appearance defect to the whole laminated glass 100. Based on this, a profile boundary of the third through hole 141 of the first shielding layer 140 may cover the profile boundaries of the first through hole 121 and the second through hole 131, so that the shielding layer defined by the profile boundary of the third through hole 141 shields the profile boundaries of the first through hole 121 and the second through hole 131, thereby improving an overall appearance of the laminated glass 100.

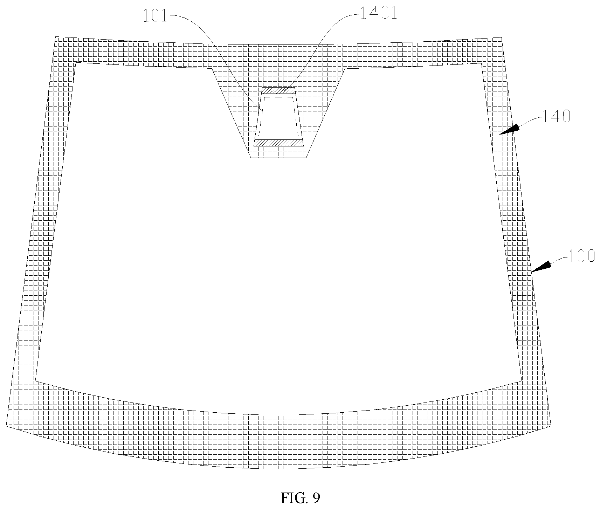

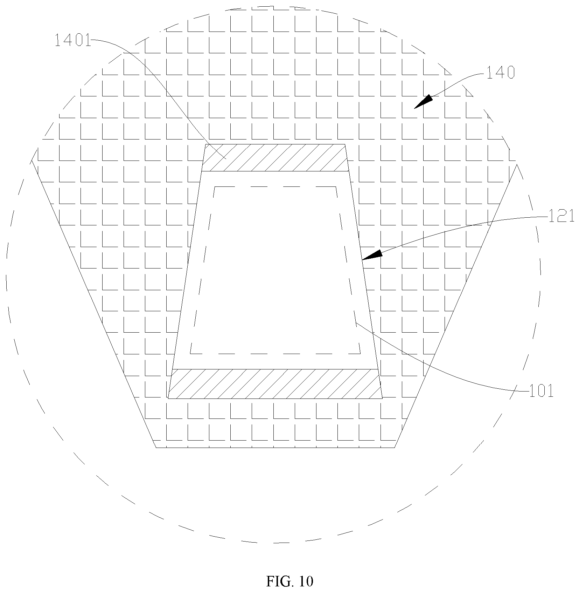

Referring to FIG. 9 and FIG. 10, the first shielding layer 140 is arranged around an edge of a surface of the outer layer glass 110 adjacent to the interior of the vehicle (the inner surface of the outer layer glass), and a T-shaped shielding region extends from a top center towards a center of the outer layer glass 110. This is because the optical sensor 200 is generally integrated in the top center of the windshield, and in order to take requirements of the vehicle appearance and an arrangement of components into consideration, these components can be shielded by the T-shaped shielding region of the first shielding layer 140. In order to satisfy the requirement that the optical sensor 200 collects the external environment data of the vehicle through the first through hole 121 and the second through hole 131, the T-shaped shielding region of the first shielding layer 140 is provided with the third through hole 141, that is, the third through hole 141 is not covered with the first shielding layer 140, and the optical window 101 is located in the third through hole 141.

In some embodiments, a profile area of the optical window 101 is less than that of the third through hole 141, and the profile area of the third through hole 141 is less than or equal to that of the first through hole 121.

Specifically, a size of the third through hole 141 in the extension direction of the target axis is greater than or equal to b and less than or equal to a, and/or a size of the third through hole 141 in the horizontal direction is greater than or equal to n and less than or equal to m. In other words, the profile area of the third through hole 141 may be greater than or equal to that of the optical window 101. Generally, the profile area of the third through hole 141 is slightly larger than that of the optical window 101, so that not only a decrease of the field-of-view region due to the insufficient profile area of the third through hole 141 can be avoided, but also poor image quality due to entrance of excessive stray light outside the vehicle into the optical sensor 200 caused by the excessive profile area of the third through hole 141 can be avoided, and a profile of the third through hole 141 is preferably 1mm to 20mm (specifically, for example, 1mm, 2mm, 3mm, 5mm, 8mm, 10mm, 15mm, 20mm, or the like, and preferably, 1mm to 10mm) larger than that of the optical window 101.

Moreover, the profile area of the third through hole 141 is smaller than or equal to that of the first through hole 121, so as to achieve a better shielding effect. In FIG. 9 and FIG. 10, the first shielding layer 140 has an extending portion 1401 extending into the first through hole 121, so that the profile area of the third through hole 141 is smaller than that of the first through hole 121. The extending portion 1401 may be continuous printing ink or dot inks spaced apart from each other, and is preferably the dot inks spaced apart from each other, which can further improve the optical quality of the optical window 101.

In some embodiments of the present application, referring to FIG. 1, FIG. 6, and FIG. 7, the laminated glass 100 further includes a second shielding layer 150, and the second shielding layer 150 is arranged on a side of the inner layer glass 120 away from the bonding layer 130. Specifically, the second shielding layer 150 may be arranged only at a top center of the surface of the inner layer glass 120 (the inner surface of the inner layer glass 120) away from the bonding layer 130 and conform to the shape of the T-shaped shielding region of the first shielding layer 140, or may be arranged around a peripheral edge of the inner surface of the inner layer glass 120, and a T-shaped shielding region extends from the top center towards the center of the inner surface of the inner layer glass 120.

Specifically, the outer layer glass 110, the first shielding layer 140, the bonding layer 130, the inner layer glass 120, and the second shielding layer 150 are sequentially laminated. A material of the second shielding layer 150 is preferably at least one of black ceramic ink, brown ceramic ink, black ultraviolet ink and brown ultraviolet ink, which may be formed by screen printing, inkjet printing, etc.. A thickness of the second shielding layer 140 is in a micrometer level, for example, 5 to 40 micrometers.

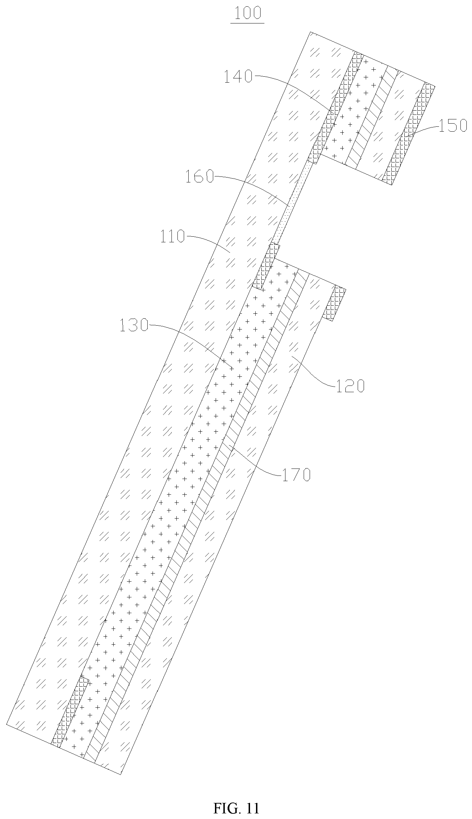

Further, referring to FIG. 11, the laminated glass 100 further includes an antireflection layer 160 arranged on a side of the outer layer glass 110 adjacent to the bonding layer 130, the antireflection layer 160 is located in the third through hole 141 and at least covers the optical window 101, and the antireflection layer 160 is configured to reduce a reflectivity of the outer layer glass 110 for an optical signal emitted and/or received by the optical sensor 200, so as to improve the detection quality of the optical sensor 200.

Further, the laminated glass 100 further includes an electric heating element (not shown in the drawings) arranged on the side of the outer layer glass 110 adjacent to the bonding layer 130, and the electric heating element is located in the third through hole 141 and at least covers the optical window 101.

Specifically, the electric heating element may include an electric heating wire, an electric heating sheet, or the like. For example, the electric heating element is a tungsten wire. The electric heating element is configured to heat the optical window 101, so that defogging and defrosting effects of the optical window 101 are realized, and the detection quality of the optical sensor 200 is improved.

Further, referring to FIG. 11 again, the laminated glass 100 further includes a thermal insulation layer 170, the thermal insulation layer 170 includes at least one metallic silver layer, silver alloy layer, or transparent conductive oxide layer, and the thermal insulation layer 170 avoids the optical window 101.

It should be noted that the thermal insulation layer 170 may be configured to reflect infrared rays, and electric heating may be even realized by adding a bus bar. The thermal insulation layer 170 may be deposited directly on the side of the outer layer glass 110 adjacent to the bonding layer 130 (the inner surface of the outer layer glass 110) or on the side of the inner layer glass 120 adjacent to the bonding layer 130 (the outer surface of the inner layer glass 120) by chemical vapor deposition (CVD) or physical vapor deposition (CVD), for example, by magnetron sputtering. The thermal insulation layer 170 is preferably able to withstand high temperature heat treatment such as a heat treatment process of a bending process such as bake bending or tempering. Specifically, when the thermal insulation layer 170 includes the transparent conductive oxide layer, the transparent conductive oxide layer may be made of indium tin oxide (ITO), fluorine-doped tin oxide (FTO), aluminum-doped zinc oxide (AZO), antimony-doped tin oxide (ATO), or the like. The thermal insulation layer 170 further includes at least two dielectric layers, each metallic silver layer, silver alloy layer, or transparent conductive oxide layer is located between two dielectric layers, and the dielectric layers are made of a material selected from oxide, nitride or oxynitride of at least one of Zn, Ti, Si, Al, Sn, Se, Zr, Ni, In, Cr, W, Ca, Y, Nb, Cu, and Sm. For example, the material may be zinc tin oxide (ZnSnOx), aluminum-doped zinc oxide (AZO), titanium oxide (TiOx), zirconium silicon nitride (SiZrN), silicon aluminum nitride (SiALN), silicon aluminum oxide (SiAlO), or the like.

Further, the outer layer glass 110 is a transparent glass or ultra-transparent glass and the inner layer glass 120 is a transparent glass or tinted glass. A total iron content of the transparent glass is less than or equal to 0.08%, and a visible light transmittance of the transparent glass is greater than or equal to 80%. A total iron content of the ultra-transparent glass is less than or equal to 0.015%, and a visible light transmittance of the ultra-transparent glass is greater than or equal to 91%. A total iron content of the tinted glass is greater than or equal to 0.1%, and a visible light transmittance of the tinted glass is greater than 70%.

Optionally, the optical sensor 200 may be configured to collect the external environment data of the vehicle. For example, the optical sensor 200 may be a visible light camera, a near infrared camera, a thermal imager, a laser radar, a gesture detection sensor, etc., so as to better achieve intelligence and a safety performance of the vehicle.

The optical sensor 200 is a visible light camera with the pixel number greater than or equal to 2 million. The MTF value of the visible light camera at 1/2 of the Nyquist frequency is greater than or equal to 0.6. Specifically, a photosensitive chip of the visible light camera may be a complementary metal oxide semiconductor (CMOS) or a charge coupled device (CCD). The pixel number of the visible light camera may be 2 million, 5 million, 8 million, or the like. A size of the photosensitive chip of the visible light camera can be 2/3" (8.8mm*6.6mm), 1/1.7" (7.4mm*5.6mm), 1/1.8" (7.2mm*5.3mm), etc., and a larger photosensitive chip can be preferred to receive more light signals. A focal length, an f-number, a viewing angle, or the like, of lens parameters of the visible light camera correspondingly meet requirements of a use scenario. Maximum optical distortion of a lens of the visible light camera is less than 3%, and the MTF value of the visible light camera at 1/2 of the Nyquist frequency is greater than or equal to 0.6, so that requirements of high-definition image collection are met.

In order to further satisfy the requirement of high-definition image collection, especially the image collection requirement of the visible light camera with the pixel number greater than or equal to 5 million or even 8 million, it is preferable that the optical window 101 has a first transmittance TL1 for visible light with a wavelength ranging from 440nm to 700nm incident at an incident angle of 0 to 70°, TL1≥50%, and specifically, for example, TL1=50%, 51%, 52%, 53%, 54%, 55%, 56%, 57%, 58%, 59%, 60%, 61%, 62%, 63%, 64%, 65%, 66%, 67%, 68%, 69%, or even TL1=70%. Further, the optical window 101 has a transmittance TL2 for visible light with a wavelength ranging from 600nm to 700nm incident at an incident angle of 0 to 70°, TL2/TL1≥0.8, the ratio of TL2 and TL1 is also generally referred to as a red light ratio, and specifically, for example, TL2/TL1=0.80, 0.81, 0.82, 0.83, 0.84, 0.85, 0.86, 0.88, or the like, and preferably, TL2/TL1≥0.85.

In addition, embodiments of the present application further provide a vehicle including the above windshield, the optical sensor 200 being mounted inside the vehicle and facing the optical window 101.

The vehicle can be a car, a passenger car, a truck, a tractor, a special transport vehicle, a special vehicle, or the like. Certainly, the vehicle may also include wheels, a chassis, an engine, etc.

The optical sensor 200 is arranged on the side of the inner layer glass 120 away from the bonding layer 130. It is understood that the optical sensor 200 is arranged inside the vehicle, and the optical sensor 200 may be fixed to the surface of the inner layer glass 120 away from the bonding layer 130 by a bracket, or the like, or may be fixed to a roof crossbeam of the vehicle by a bracket, or the like. A photographing direction of the optical sensor 200 is towards the first through hole 121.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the protection scope of the present application should be subject to the appended claims.

**Claims**

1. A windshield, comprising:

   an optical sensor (200) mounted inside a vehicle; and
   a laminated glass (100) having an optical window (101) in a visual field of the optical sensor (200), the laminated glass (100) comprising an outer layer glass (110), a bonding layer (130) and an inner layer glass (120) which are laminated, and the inner layer glass (120) being provided with a first through hole (121);
   wherein the optical window (101) is located in the first through hole (121), and an MTF value of the optical window (101) is greater than or equal to 0.3.

2. The windshield according to claim 1, wherein relative positions of the laminated glass (100) and the optical sensor (200) satisfy the following conditions:
   after the windshield is mounted on the vehicle, an included angle between a connecting line of a top end and a bottom end of the laminated glass (100) and a central axis of the optical sensor (200) is $\alpha$; a vertical field-of-view angle of the optical sensor (200) is $\beta$; a length of a connecting line of a top end and a bottom end of the first through hole (121) is a; a length of an intersecting line of a vertical field of view of the optical sensor (200) and the outer layer glass (110) is b; wherein a≥b+10,

$$b = K1 \times [1/\tan(\alpha - \beta/2) - 1/\tan(\alpha + \beta/2)]$$

   K1 is a constant, and K1 ranges from 12 to 18.

3. The windshield according to claim 2, wherein the relative positions of the laminated glass (100) and the optical sensor (200) satisfy the following conditions:
   a horizontal field-of-view angle of the optical sensor (200) is $\gamma$; a width of the first through hole (121) in a direction of a horizontal field of view of the optical sensor (200) is m; a length of an intersecting line of the horizontal field of view of the optical sensor (200) and the outer layer glass (110) is n; wherein m ≥n+10,

$$n = K2 \times \tan(\gamma/2)/\sin(\alpha)$$

   ($\alpha$), K2 is a constant, and K2 ranges from 24 to 36.

4. The windshield according to claim 3, wherein $\alpha$ ranges from 20° to 45°, $\beta$ ranges from 17° to 65°, and $\gamma$ ranges from 28° to 120°.

5. The windshield according to claim 1, wherein a minimum gap distance between the optical sensor (200) and the inner layer glass (120) is c, and c is 2mm to 5mm.

6. The windshield according to claim 1, wherein the bonding layer (130) is provided with a second through hole (131), the second through hole (131) is in communication with the first through hole (121), and the optical window (101) is located in the second through hole (131).

7. The windshield according to claim 6, wherein the laminated glass (100) further comprises a first shielding layer (140) arranged between the outer layer glass (110) and the bonding layer (130), the first shielding layer (140) is provided with a third through hole (141), the third through hole (141) is in communication with the second through hole (131), and the optical window (101) is located in the third through hole (141).

8. The windshield according to claim 7, wherein the laminated glass (100) further comprises a second shielding layer (150), and the second shielding layer (150) is arranged on a side of the inner layer glass (120) away from the bonding layer (130).

9. The windshield according to claim 7, wherein a profile area of the optical window (101) is less than that of the third through hole (141), the profile area of the third through hole (141) is less than or equal to that of the first through hole (121), and a profile area of the second through hole (131) is greater than or equal to that of the first through hole (121).

10. The windshield according to claim 7, wherein the laminated glass (100) further comprises an antireflection layer (160) arranged on a side of the outer layer glass (110) adjacent to the bonding layer (130), the antireflection layer (160) is located in the third through hole (141) and at least covers the optical window (101), and the antireflection layer (160) is configured to reduce a reflectivity of the outer layer glass (110) to an optical signal emitted and/or received by the optical sensor (200).

11. The windshield according to claim 7, wherein the laminated glass (100) further comprises an electric heating element arranged on the side of the outer layer glass (110) adjacent to the bonding layer (130), and the electric heating element is located in the third through hole (141) and at least covers the optical window (101).

12. The windshield according to claim 1, wherein the laminated glass (100) further comprises a thermal insulation layer (170), the thermal insulation layer (170) comprises at least one metallic silver layer, silver alloy layer, or transparent conductive oxide layer, and the thermal insulation layer (170) avoids the optical window (101).

13. The windshield according to claim 1, wherein the outer layer glass (110) is a transparent glass or ultra-transparent glass and the inner layer glass (120) is a transparent glass or tinted glass;
a total iron content of the transparent glass is less than or equal to 0.08%, and a visible light transmittance of the transparent glass is greater than or equal to 80%; a total iron content of the ultra-transparent glass is less than or equal to 0.015%, and a visible light transmittance of the ultra-transparent glass is greater than or equal to 91%; a total iron content of the tinted glass is greater than or equal to 0.1%, and a visible light transmittance of the tinted glass is greater than 70%.

14. The windshield according to claim 1, wherein the optical sensor (200) is a visible light camera having a pixel number greater than or equal to 2 million, and an MTF value of the visible light camera at 1/2 of the Nyquist frequency is greater than or equal to 0.6.

15. The windshield according to claim 1, wherein the optical window (101) has a first transmittance TL1 for visible light with a wavelength ranging from 440nm to 700nm incident at an incident angle of 0° to 70°, the optical window (101) has a transmittance TL2 for visible light with a wavelength ranging from 600nm to 700nm incident at an incident angle of 0° to 70°, TL1≥50%, and TL2/TL1≥0.8.

16. A vehicle comprising the windshield according to any one of claims 1 to 15, the optical sensor (200) being mounted inside the vehicle and facing the optical window (101).

FIG.　1

121

101

FIG. 2

121

101

FIG. 3

121

101

FIG. 4

121

101

FIG. 5

FIG. 6

n

110

140

130

m

120

γ

150

200

FIG. 7

FIG. 8

FIG. 9

FIG. 10

100

140

150

160

110

130

120

170

FIG. 11

## INTERNATIONAL SEARCH REPORT

| International application No. |
| --- |
| **PCT/CN2024/118725** |

**A. CLASSIFICATION OF SUBJECT MATTER**

B60J1/02(2006.01)i; B32B17/10(2006.01)i

According to International Patent Classification (IPC) or to both national classification and IPC

**B. FIELDS SEARCHED**

Minimum documentation searched (classification system followed by classification symbols)

IPC:B60J,B32B

Documentation searched other than minimum documentation to the extent that such documents are included in the fields searched

Electronic data base consulted during the international search (name of data base and, where practicable, search terms used)

CNTXT, ENTXT, VEN, CNKI, DWPI: MTE, 调制传递函数, 函数, 调制, 屈光度, 光学畸变, 遮蔽, 掩蔽, 反射, 光学器件, 光学元件, 摄像头, 照相机, 传感器, optical, diopter, camera, windshield, optics, sensor, obscuration, black

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117124819 A (FUYAO GLASS INDUSTRY GROUP CO., LTD.) 28 November 2023 (2023-11-28)<br>claims 1-16 | 1-16 |
| PX | CN 117261559 A (FUYAO GLASS INDUSTRY GROUP CO., LTD.) 22 December 2023 (2023-12-22)<br>description, specific embodiments, and figures 1-11 | 1-4 |
| X | CN 115485133 A (AGP AMERICA S.A.) 16 December 2022 (2022-12-16)<br>description, specific embodiments, figures 1-11, and claims 1-26 | 1, 5-16 |
| X | CN 112208310 A (FUYAO GLASS INDUSTRY GROUP CO., LTD.) 12 January 2021 (2021-01-12)<br>description, specific embodiments, and figures 1-8 | 1, 5-16 |
| X | CN 113365815 A (SAINT-GOBAIN GLASS FRANCE S.A.) 07 September 2021 (2021-09-07)<br>description, specific embodiments, and figures 1-9' | 1, 5-16 |

| ☑ Further documents are listed in the continuation of Box C. | ☑ See patent family annex. |
| --- | --- |

\* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **11 December 2024** | **29 December 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2024/118725** |

**C.    DOCUMENTS CONSIDERED TO BE RELEVANT**

| Category* | Citation of document, with indication, where appropriate, of the relevant passages | Relevant to claim No. |
|---|---|---|
| A | US 2023136351 A1 (GM GLOBAL TECHNOLOGY OPERATIONS LLC) 04 May 2023 (2023-05-04)<br>entire document | 1-16 |

Form PCT/ISA/210 (second sheet) (July 2022)

## INTERNATIONAL SEARCH REPORT
### Information on patent family members

International application No.

**PCT/CN2024/118725**

| Patent document cited in search report | | | Publication date (day/month/year) | Patent family member(s) | | | Publication date (day/month/year) |
|---|---|---|---|---|---|---|---|
| CN | 117124819 | A | 28 November 2023 | None | | | |
| CN | 117261559 | A | 22 December 2023 | None | | | |
| CN | 115485133 | A | 16 December 2022 | US | 2023150225 | A1 | 18 May 2023 |
| | | | | EP | 4143021 | A1 | 08 March 2023 |
| | | | | WO | 2021220206 | A1 | 04 November 2021 |
| CN | 112208310 | A | 12 January 2021 | None | | | |
| CN | 113365815 | A | 07 September 2021 | US | 2023052395 | A1 | 16 February 2023 |
| | | | | US | 12005679 | B2 | 11 June 2024 |
| | | | | JP | 2023509167 | A | 07 March 2023 |
| | | | | WO | 2021136907 | A1 | 08 July 2021 |
| | | | | KR | 20220123527 | A | 07 September 2022 |
| | | | | FR | 3105943 | A1 | 09 July 2021 |
| | | | | FR | 3105943 | B1 | 19 May 2023 |
| | | | | EP | 4085282 | A1 | 09 November 2022 |
| | | | | EP | 4085282 | B1 | 31 January 2024 |
| US | 2023136351 | A1 | 04 May 2023 | US | 11789352 | B2 | 17 October 2023 |
| | | | | DE | 102022122471 | A1 | 04 May 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311192201